# EUROPEAN PATENT APPLICATION

(11) **EP 4 418 611 A1**
(43) Date of publication of application: **21.08.2024**
(21) Application number: 23157063.1
(22) Date of filing: 16.02.2023
(51) Int. Cl.: H04L 9/40, G06N 3/02, G06N 3/045

(54) **IDENTIFYING MALWARE IN A COMPUTER NETWORK**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A method for identifying computer nodes comprising malware in a computer network. The method comprises receiving a graph relating to a computer network; processing, by a neural network, the received graph; identifying, by the neural network, a subgraph of the received graph. The identified subgraph comprises an indication of a plurality of computer nodes of the network traffic data that are infected with malware, and a label indicating a type of malware infecting the indicated computer nodes.

## Description

### TECHNOLOGICAL FIELD

Identifying malware in a computer network. More specifically, identifying malware in a computer network using a neural network.

### BACKGROUND

A bot, also known as a robot, is a software application that runs automated scripts over a computer network. The computer network may be the Internet or an intranet. Bots may imitate human activity on the computer network, for example messaging on a large scale. On the Internet, a benevolent use of a bot is for web crawling, whereby an automated script of the bot fetches information from web servers, and analyses and files the information. A bot may also be used maliciously, for example, as part of a coordinated denial-of-service attack.

A botnet is a group of connected devices, each running one or more bots. A botnet may be used maliciously to perform a distributed denial-of-service attack, steal data, send spam, or allow an attacker to access a device and its connection. In some instances, a botnet may be controlled using command and control software. The software controlling a malicious bot is termed malware. The manner in which a malicious bot may for part of a botnet depends on the malware present. Malware will often exploit a vulnerability of a computing device, it may be a hardware and/or software vulnerability, and the malware will attempt to spread to neighbouring devices in a computer network. After a period of time, a number of secondary computing devices may be infected with the malware and together the infected devices, forming a botnet, may attack in a coordinated manner a system not infected with the malware. The time taken for a botnet to form may be minutes or hours, for example.

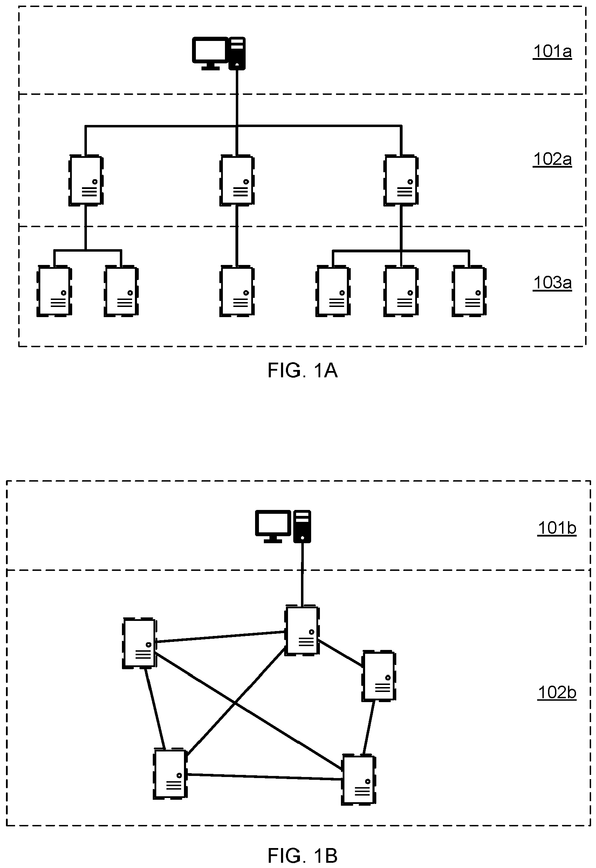

Figures 1A and 1B illustrate two distinct botnets with Figure 1A illustrating a centralised botnet and Figure 1B illustrating a decentralised botnet.

The centralised botnet of Figure 1A includes a number of entities or devices each of which may be a real or virtual computer on the computer network. A controlling entity 101a, sometimes referred to as a botmaster, provides command and control (C&C) data to one or more C&C servers 102a. Each C&C server communications with one or more bots 103a. The C&C servers 102a and bots 103a may be entities or devices on a computer network that were provisioned with an automated script by the entity/device and may be referred to as infected device or entities.

The decentralised botnet of Figure 1B includes a number of entities or devices each of which may be a real or virtual computer on the computer network. A controlling entity 101b provides command and control (C&C) data to one or more C&C servers 102b that may also function as a bot. A C&C server 102b may communicate with another C&C server 102b.

A computer network with one or more botnets operating thereon may wish to identify the specific botnet to determine if the botnet is benevolent or malicious and, if malicious, thereby determine how it should be addressed by measure such as quarantine of one or more infected entities or removal of entities from a computer network.

An Intrusion Detection System (IDS) may be configured to analyse a computer network and take remedial action, such as quarantining devices infected with malware, if malware, a bot or a botnet are detected on the network. An IDS may be up to date with knowledge of both old and new malware - this is especially important if new devices running new software may access the computer network as those new devices are more likely to contain new vulnerabilities enabling a malware exploit. Typically, an IDS will scan devices in order to identify a malware signature, however as malware sophistication increases, relying on signatures may be insufficient to identify malware running on devices on a network because the malware may mutate thereby changing its signature rendering it undetectable by the IDS.

The examples described herein are not limited to examples which solve problems mentioned in this background section.

### SUMMARY

Examples of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology provides a method for identifying computer nodes comprising malware in a computer network. The method comprises: receiving a graph relating to a computer network; processing, by a neural network, the received graph; identifying, by the neural network, a subgraph of the received graph. The identified subgraph comprises: an indication of a plurality of nodes of the graph that are infected with malware, and a label indicating a type of malware infecting the indicated plurality of computer nodes. The identified subgraph can provide context of devices surrounding a botnet that may be infected already or that are likely to be infected in the future. This enables precautionary measure to be taken either automatically or after the botnet is identified. The method enables an Intrusion Detection System (IDS) to continually learn what different botnet strains may appear on a network as, which can highlight vulnerable parts of a network. The outputting of multiple subgraphs from the model enables multiple botnets to be searched for with a single network scan. Two or more identified subgraph may overlap if multiple malware strains infect a single device and that device forms part of two or more botnets.

In some examples the method further comprises receiving network traffic data, the network traffic data comprising a plurality of computer nodes; and creating the graph relating to a computer network using the received network traffic data.

In some examples the method further comprises parsing the received network traffic data to create the graph. The created graph comprises a plurality of nodes and edges, and each edge defines a connection to a respective node of the plurality of nodes.

In some examples the created graph further comprises an attribute that defines a context of respective nodes of the plurality of nodes.

In some examples the identified subgraph is a first identified subgraph; and the method further comprises identifying a second subgraph different to the first subgraph.

In some examples the neural network is a graph neural network.

In some examples the neural network was trained using a plurality of network subgraphs, each of the network subgraphs comprising nodes infected with malware, and each of the network subgraphs labelled with an indication of the malware the nodes are infected with.

In some examples each of the network subgraphs comprising nodes infected with a single version of malware.

In some examples the plurality of computer nodes of the network traffic data comprises a subgroup of nodes that are infected with malware and the subgroup of nodes form a botnet.

Another aspect of the disclosed technology comprises a method of training a neural network. The method comprising: collating one or more subgraphs, wherein each subgraph comprises nodes infected with malware, and each of the subgraphs is labelled with an indication of malware the nodes are infected with; and training neural network, using the collated one or more subgraphs, to identify in an input graph one or more subgraphs of the input graph; wherein each identified subgraph relates to a botnet and the botnet that is labelled with an indication of malware contained within the botnet.

In some examples each of the collated one or more subgraphs comprises only nodes infected with malware.

In some examples each of the collated subgraphs relates to a different botnet formation.

In some examples the training is retraining of a neural network previously trained according to the method described above.

In some examples of the method of training the neural network is a graph neural network.

Another aspect of the disclosed technology comprises a neural network trained according to a method recited above.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

In the accompanying drawings:
Figure 1A illustrates a schematic of an exemplary centralised botnet;
Figure 1B illustrates a schematic of an exemplary decentralised botnet;
Figure 2 illustrates three network graphs each infected with a different botnet;
Figure 3 illustrates a method of generating training data;
Figure 4 illustrates a machine learning method for generating output graphs;
Figure 5 illustrates a method of processing an input graph;
Figure 6A illustrates three malware graphs;
Figure 6B illustrates unclassified and classified network graphs;
Figure 7 illustrates a block diagram of a method for identifying computer nodes comprising malware in a computer network;
Figure 8 illustrates a block diagram of method of training a machine learned model; and
Figure 9 illustrates a computing device.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

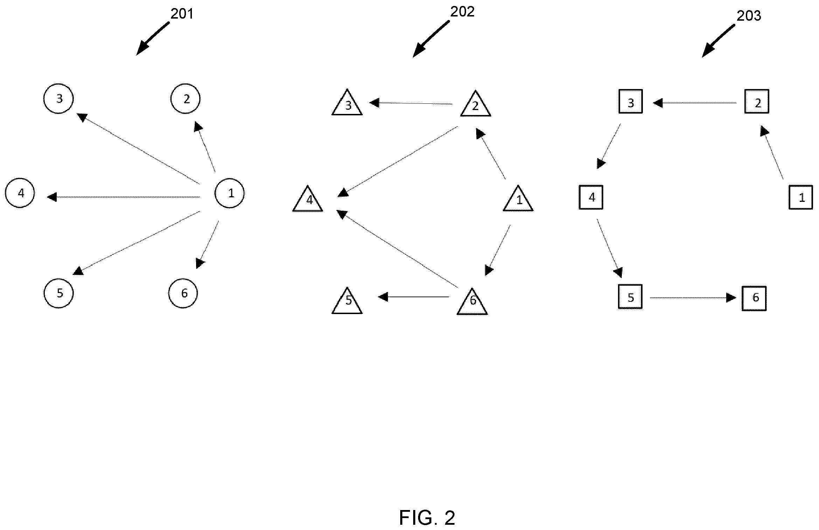

Figure 2 illustrates three network graphs each infected with a botnet. A network graph identifies how devices, corresponding to node attributes of the graph, are related to each other using graph attributes called edges. In the figure, nodes are illustrated as shapes (circles, triangles and squares) and edges are illustrated as arrows. A node can have one or more edges to another node and each edge may have a direction illustrated by the arrow direction. One or more attributes may be assigned to an edge or a node to give the edge or node a particular meaning. In relation to the examples described and illustrated herein, exemplary attributes assigned to a device may indicate a type of device it is and/or during a machine learning stage a label may indicate which malware is present in the device. Exemplary attributes assigned to an edge may include a protocol involved, an amount of data sent, an indication of whether the edge is known to relate to a malware infected device.

A subgraph is a region within a graph therefore a botnet may comprise a plurality of nodes infected with malware that is a subset of all nodes in a network. The entire network may be represented by a graph while just the botnet may be represented by a subgraph. Figure 2, more precisely, illustrates three subgraphs that each show a botnet.

Specific configurations, or topologies, of nodes and edges can identify a particular botnet as the topology may be unique to the particular botnet once the botnet is established in a computer network. In Figure 2, a first subgraph 201 illustrates a first botnet subgraph; a second subgraph 202 illustrates a second botnet subgraph; and a third subgraph 203 illustrates a third botnet subgraph. The first 201, second 202 and third 203 subgraphs represent example botnets infected with the different malware. Each botnet has unique characteristics, such as a type of computing device that is infected with the malware, e.g., a personal computer, a Mac, an Internet of Things device, a server, etc., one or more protocols used to spread the malware between devices, a propagation method, e.g., client-server, peer-to-peer, etc. and so on. The characteristics can be derived from network traffic data. The network traffic data may be collected IP network traffic entering or exiting an interface of a device on the network. In some examples, NetFlow (TM), sFlow (TM), or the like. Additional device and edge characterise are not illustrated in Figure 2.

The first, second and third 201, 202, 203 botnets of Figure 2 are distinguished from each other by the type of device that is infected by the malware which is represented by a node shape: circle, triangle and square, the method of propagation of the malware which is represented by the directions of the edge, e.g., the arrow direction in the figure. The distinguishing features of the three subnets of Figure 2 may be learned by a machine learning model to distinguish between botnets.

In the first botnet subgraph 201 of Figure 2, node 1 spread malware to nodes 2 to 6. In the other two botnet subgraphs 202, 203, there is a different malware spread pattern from node 1. Another factor that could distinguish between the subgraphs is the number of nodes infected. Not illustrated is an attribute of a time taken for the malware to spread between respective nodes, which may be a further distinguishing feature.

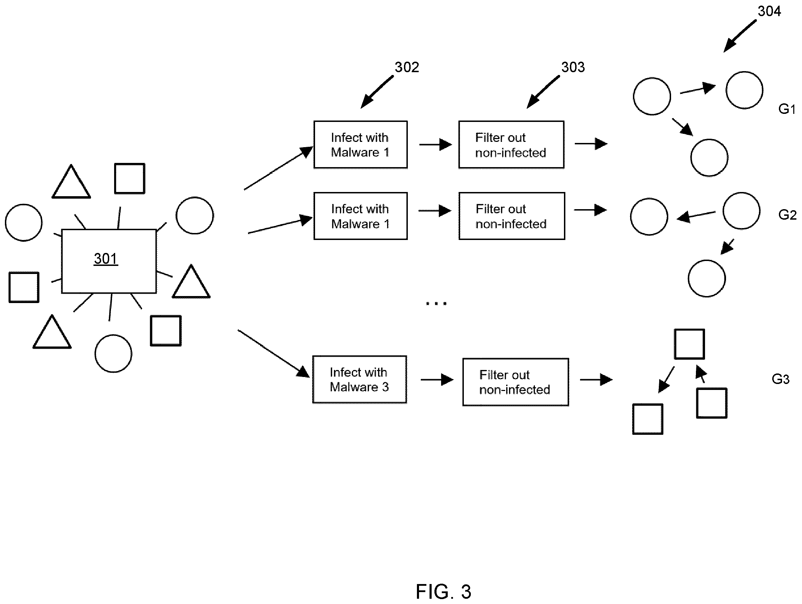

Figure 3 illustrates a method for generating training data for training a machine learning model to identify subgraphs containing one or more botnets. In the figure is a computer network 301 comprising different types of devices represented by different shapes. The devices in the network are interconnected and a device in computer network 301 is infected with malware. A copy of the network is infected 302 one or more times with each version of malware. After a period of time sufficient for the malware to spread through the network 301, the network is sampled to determine which devices are infected and how the malware propagated through the network. Data relating to time steps for propagation is calculated for use in labelling edges of a graph of the network. At step 303, devices not infected with malware are filtered out thereby leaving only devices infected with the malware. A subgraph featuring only devices infected with the inserted malware is provided.

Figure 3 illustrates three subgraphs G₁, G₂, G₃ whereby two are illustrated as being infected with the same malware, Malware 1. Different subgraphs are generated from an infection in the same network 301 with the same malware because the location of the original infection in the network can affect the path of subsequent infections. For each malware strain, the infection process is repeated until sufficient subgraphs are present for each topology variant. The process is repeated for each malware strain and/or malware version available to maximise botnet training data.

Not all malware strains and/or variants will be available for testing initially and new variants will become available over time. Additional training data may be generated by infecting the network 301 with new malware strains/variants to generate additional subgraphs Gₓ to be used as additional training data. This means that a model created using subgraphs G₁, G₂, G₃ can be updated with additional subgraphs Gₓ.

In order to generate training data, it is said that a copy of the network is infected 302 one or more times with each version of malware. In one example, a botnet subgraph training data may be generated by taking real-world work network data of a botnet and isolating the nodes that became infected with malware to create the botnet. In another example, an air gapped, i.e., secure and isolated testing network may be used to inject malware and then allow a real-world spreading of the malware and subsequent botnet creation. The network data of the testing network is then used to isolate the nodes that became infected with malware to create the botnet and a subgraph is created thereby. In yet another example, a virtual network environment is used to test a simulation of a piece of malware whereby the simulation includes known parameters of the malware behaviour in relation to how it spreads between devices in a network.

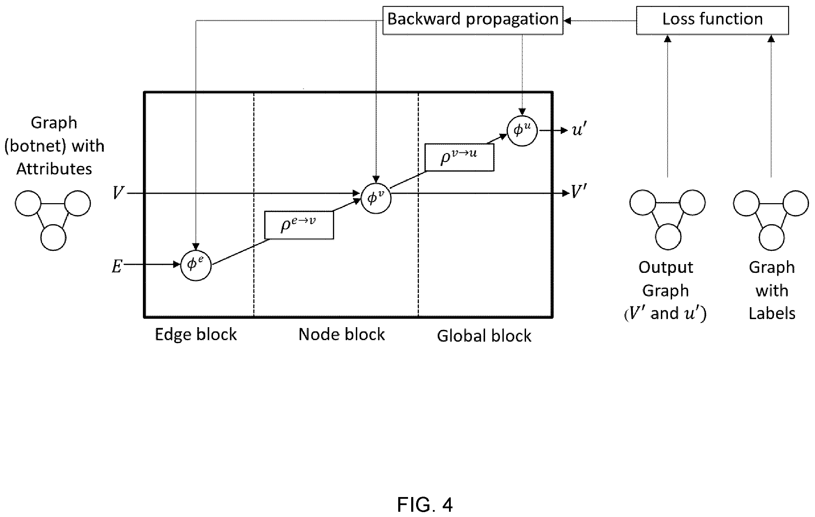

Figure 4 illustrates a machine learning method for generating output graphs. Supervised machine learning models, including deep learning models, generally use a series of training data to teach the model how to recognise certain inputs and give them the correct labels as an output.

In included examples, a specific graph machine learning model called Graph Nets is described in which a series of neural networks learn node, edge and global attributes of a graph. Other graph neural network models are usable to carry out the invention and Graph Nets is only one option of a family of graph neural networks. Each implementation of a graph neural network applies a neural network to a graph in a different way; however, the output is similar and therefore applicable to the computer implemented methods described herein.

Botnet subgraph training data is created in the examples described in relation to Figure 3 and may be used to train a machine learning model in a manner illustrated in Figure 4. As mentioned above, a specific example is provided in relation to a Graph Net, however other machine learning model types are applicable.

A Graph Net may comprise of three blocks: an edge block, a node block and a global block. Each block is responsible for processing certain properties of an input graph; not all blocks need to be used. In the present example, for each output there is a pair of graphs: a first graph with only network attributes for each node and edge and a second graph with botnet labels on the nodes and edges.

The edge block, a first block, is responsible for processing all edges in an inputted graph. The edge processing is performed by neural network *φ*^{e} which takes attributes of each edge, E, as an input and outputs a value, E'. The value the neural net is trained to output is the edge labels given by the second graph. How accurately the output value is calculated is determined by a process called *back propagation* which involves using the difference between the output value and target value, calculated by the loss *function,* to update the neural network to become more accurate. The result of the edge block is to label certain observations of connections as belonging to a certain botnet depending on sent packets, bytes and/or other attributes. A literal botnet name may not be used during the process, but instead the name transformed into a format more easily understood by a neural network, such as by *one-hot encoding.*

The node block, a second block, processes all nodes in an inputted graph. This is performed by the neural network *φ^{v}* which uses a node's attributes, *V*, as well as any edges pointing to or away from the node. Before the edges can be used, they are processed so that all edges of the node to be labelled are aggregated to form an input to the neural network. These aggregations are processed using the *ρ*^{*e*→*v*} function. The function collects the edges connected to a node to produce one aggregated value - the connections belonging to a bot in a botnet. Edge direction is not essential information for labelling but can describe how the malware propagates to form the botnet. A second input to the node block neural network is node attributes with a main attribute being a device type.

The global block, a third block, tracks how much of the input graph has been explored. The edge and node neural networks only keep track of one entity at a time, but they do not have a concept of neighbouring nodes, hence the global block allows more than mere capturing edges. To capture the context of node neighbourhoods, a technique called "message passing" is used which transfers node states learnt from the node neural network to other nodes. These passing captures the context of connected nodes which enables learning the structure of graphs.

The outputs of the Graph Net are *u'* and *V'* which are the global and node labels, respectively. The output *u'* is only used during training and is not used for botnet labelling. *V'* is used to label the input graph to denote whether all nodes belong to a particular botnet. In order for the Graph Net to learn how to label observed attributes correctly, it goes through a form of comparing what the actual answer should be (graph with labels) with what it produced (*V'*)*.* Measuring the difference in these answers will be fed into a loss *function* which then drives a process called *backward propagation* to update the neural networks *φ^{e}, φ^{v}* and *φ^{u}* to become better at labelling future observations correctly. This process is called *deep learning.*

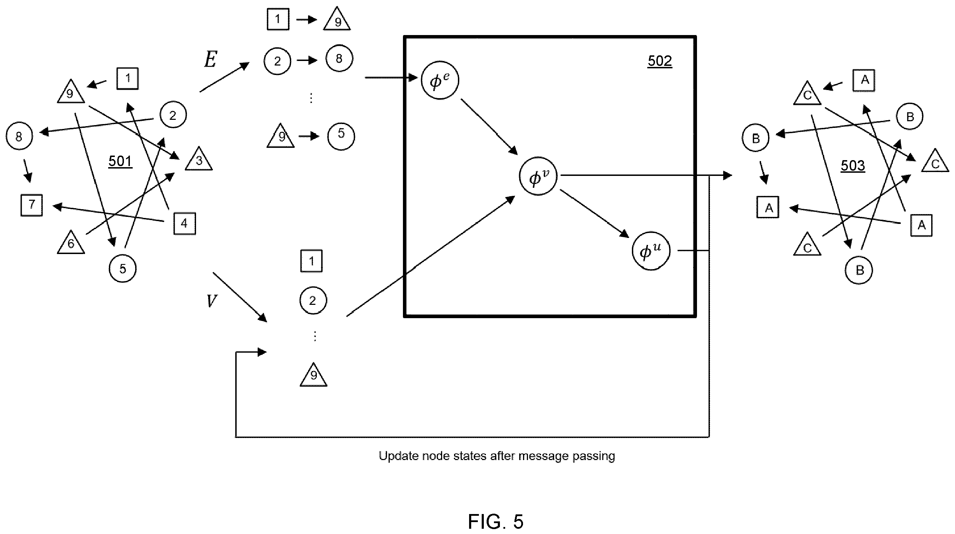

Figure 5 illustrates a method of processing an input graph 501 using a graph net 502 to produce an output graph with labelled subgraphs(s) 503. A suitably trained model, such as a model trained by the process illustrated in Figure 4, can be used to identify one or more botnets in an input graph 501. The input graph can be a subgraph or a graph of a complete network, e.g., a computer network which requires diagnosing. This means an input graph 501 may be much larger than training subgraphs. A goal of the trained model is to identify subgraphs within a graph. An example of how a computer network can be labelled by the finalised ML model is illustrated in Figure 5.

The input graph 501 of Figure 5 corresponds to a computer network to be labelled and have a similar configuration as the fully connected network 301 of Figure 3. The input graph 501 may have been created using gathered network data of an operational network. The input graph 501 illustrates infected nodes forming a botnet - the nodes correspond to devices of the network and each node of a same shape corresponds to a device of a same type. The nodes and edges of the input graph 501 are fed into the node and edge neural networks, and the networks assign botnet labels to infected nodes. As discussed in relation to the learning stage illustrated in Figure 4, a form of message passing enables the neural networks to understand each node's neighbourhoods thereby providing context of the input graph. This means each node's state is passed on to other nodes along all directed edges; for example, the state of node 1 is passed on to node 9, from node 2 to node 8 and so on. When a new message pass is required, each node is updated with the last iteration's output. After a number of message passes, which determine how many hops there are and is indicative of subgraph size, the final output of the graph net 502 is an output graph 503 with node labels indicating which nodes are infected and what botnet subgraph the infected nodes. The output can, for example, be used by a security analysist for further investigation or fed into an IDS to trigger appropriate anti-malware actions.

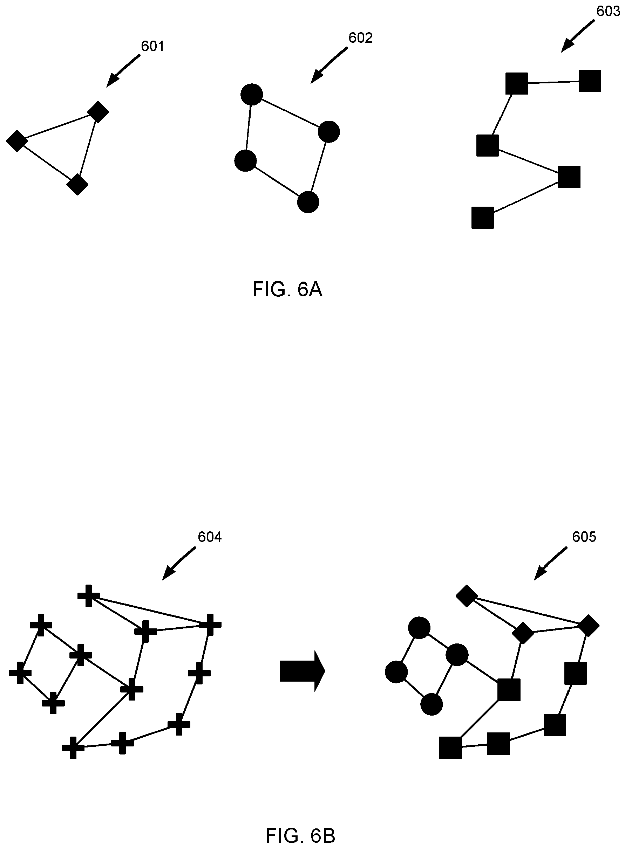

Figure 6A illustrates three malware subgraphs 601, 602, 603 that each correspond to a separate botnet. A machine learning model may be trained using these three subgraphs (and possibly others). Figure 6B illustrates an unclassified network graph 604 that may be processed by a model described above in order to produce a classified network graph 605 with labels for each of the three botnets corresponding to botnet labels applied to the malware subgraphs 601, 602, 603.

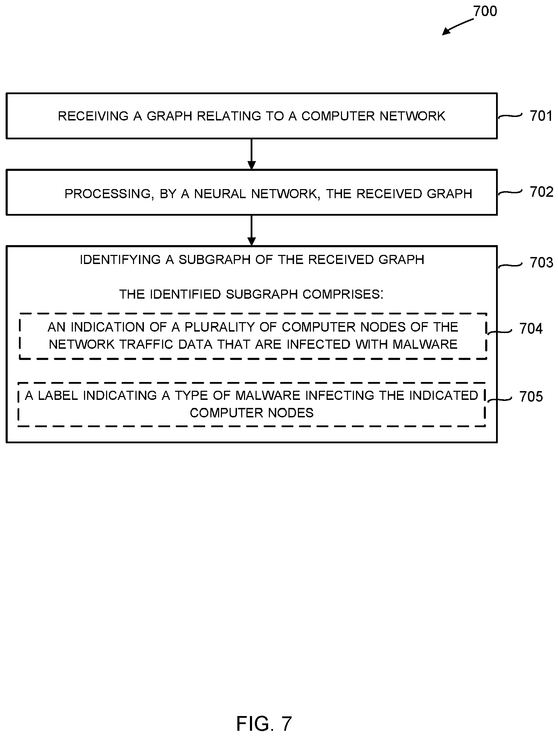

Figure 7 illustrates a block diagram of a method 700 for identifying computer nodes comprising malware in a computer network. At block 701, receiving a graph relating to a computer network. At block 702, processing, by a neural network, the received graph. At block 703, identifying a subgraph of the received graph. Block 704 illustrates that the identified subgraph comprises an indication of a plurality of computer nodes of the network traffic data that are infected with malware. Block 705 illustrates that the identified subgraph comprises a label indicating a type of malware infecting the indicated computer nodes.

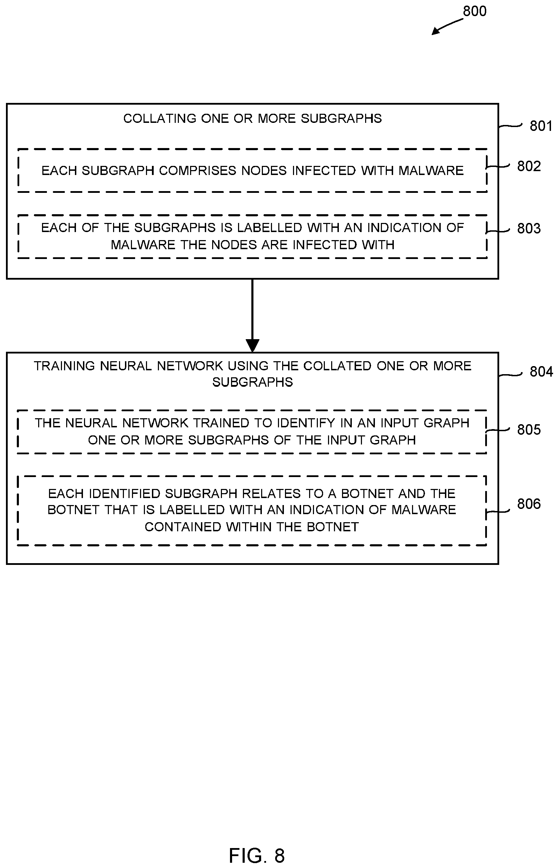

Figure 8 illustrates a block diagram of method 800 of training a machine learned model. At block 801, collating one or more subgraphs. Block 802 illustrates that each subgraph comprises nodes infected with malware. Block 803 illustrates that each of the subgraphs is labelled with an indication of malware the nodes are infected with. At block 804, training neural network using the collated one or more subgraphs. Block 805 illustrates that the neural network trained to identify in an input graph one or more subgraphs of the input graph. Block 806 illustrates that each identified subgraph relates to a botnet and the botnet that is labelled with an indication of malware contained within the botnet

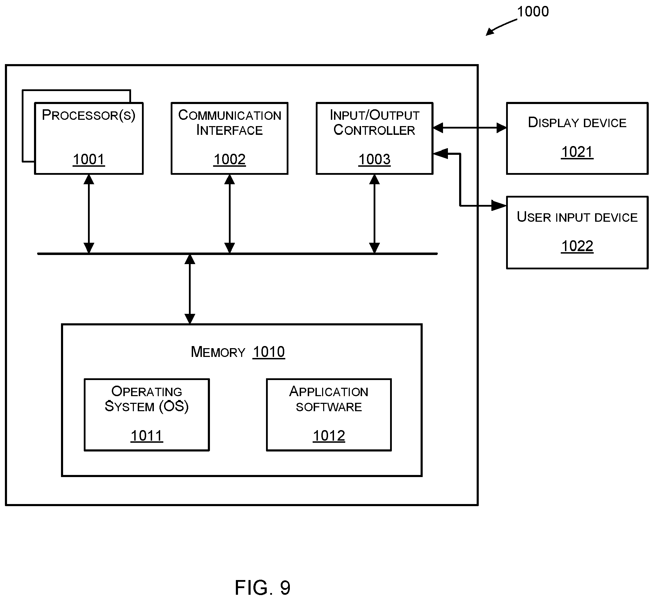

Figure 9 illustrates a computing device 1000 suitable to perform the methods defined in the claims and described above. Figure 9 illustrates various components of an example computing device 1000. The computing device is of any suitable form such as a smart phone, a desktop computer, an unmanned aerial vehicle, a tablet computer, a laptop computer, or a virtual machine.

The computing device 1000 comprises one or more processors 1001 which are microprocessors, controllers or any other suitable type of processors for processing computer executable instructions to control the operation of the device in order to perform the methods of Figures 7 and 8. In some examples, for example where a system on a chip architecture is used, the processors 1001 include one or more fixed function blocks (also referred to as accelerators) which implement a part of the method of Figures 7 and 8 in hardware (rather than software or firmware). That is, the methods described herein are implemented in any one or more of software, firmware, or hardware. The computing device has a data store that may hold holding full or subgraphs graphs to be classified, or subgraphs to be used to train a machine learning model. Platform software comprising an operating system 1011 or any other suitable platform software is provided at the computing-based device to enable application software 1012 to be executed on the device. Although the computer storage media (memory 1010) is shown within the computing device 1000 it will be appreciated that the storage is, in some examples, distributed or located remotely and accessed via a network or other communication link (e.g., using communication interface 1022).

The computing device 1000 also comprises an input/output controller 1003 arranged to output display information to a display device 1021 which may be separate from or integral to the computing device 1000. The display information may provide a graphical user interface. The input/output controller 1003 is also arranged to receive and process input from one or more devices, such as a user input device 1022 (e.g., a mouse, keyboard, camera, microphone or other sensor). In some examples the user input device 1022 detects voice input, user gestures or other user actions. In an embodiment the display device 1021 also acts as the user input device 1022 if it is a touch sensitive display device. The input/output controller 1003 outputs data to devices other than the display device in some examples.

The methods described herein may be performed by: (i) a data processing apparatus, device and/or system comprising means for carrying out the described method(s); (ii) a computer program comprising instructions which, when the program is executed by a computer, cause the computer to carry out the described method(s); and/or (iii) a computer-readable medium comprising instructions which, when executed by a computer, cause the computer to carry out the described method(s).

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

## Claims

1. A method for identifying computer nodes comprising malware in a computer network, the method comprises:
receiving a graph relating to a computer network;
processing, by a neural network, the received graph;
identifying, by the neural network, a subgraph of the received graph, wherein the identified subgraph comprises:
an indication of a plurality of nodes of the graph that are infected with malware, and
a label indicating a type of malware infecting the indicated plurality of computer nodes.

2. The method of claim 1, further comprising:
receiving network traffic data, the network traffic data comprising a plurality of computer nodes; and
creating the graph relating to a computer network using the received network traffic data.

3. The method of claim 2, further comprising parsing the received network traffic data to create the graph;
wherein the created graph comprises a plurality of nodes and edges; and
wherein each edge defines a connection to a respective node of the plurality of nodes.

4. The method of claim 3, wherein the created graph further comprises an attribute that defines a context of respective nodes of the plurality of nodes.

5. The method of any preceding claim, wherein the identified subgraph is a first identified subgraph; and
the method further comprises identifying a second subgraph different to the first subgraph.

6. The method of any preceding claim, wherein the neural network is a graph neural network.

7. The method of any preceding claim, wherein the neural network was trained using a plurality of network subgraphs, each of the network subgraphs comprising nodes infected with malware, and each of the network subgraphs labelled with an indication of the malware the nodes are infected with.

8. The method of claim 7, wherein each of the network subgraphs comprising nodes infected with a single version of malware.

9. The method of claim 2, wherein the plurality of computer nodes of the network traffic data comprises a subgroup of nodes that are infected with malware and the subgroup of nodes form a botnet.

10. A method of training a neural network, the method comprising:
collating one or more subgraphs, wherein each subgraph comprises nodes infected with malware, and each of the subgraphs is labelled with an indication of malware the nodes are infected with; and
training neural network, using the collated one or more subgraphs, to identify in an input graph one or more subgraphs of the input graph; wherein each identified subgraph relates to a botnet and the botnet that is labelled with an indication of malware contained within the botnet.

11. The method of claim 10, wherein each of the collated one or more subgraphs comprises only nodes infected with malware.

12. The method of claim 10 or claim 11, wherein each of the collated subgraphs relates to a different botnet formation.

13. The method of any of claims 10 to 12, wherein the training is retraining of a neural network previously trained according to the method of any of claims 10 to 12.

14. The method of any of claims 10 to 13, wherein the neural network is a graph neural network.

15. A neural network trained according to the method of any of claims 10 to 14.
